# EUROPEAN PATENT APPLICATION

(11) **EP 4 458 648 A1**
(43) Date of publication of application: **06.11.2024**
(21) Application number: 24173901.0
(22) Date of filing: 02.05.2024
(51) Int. Cl.: B62B 1/20, B62B 5/00, F16B 5/02

(54) **WHEELBARROW TOW ATTACHMENT**

(30) Priority: 02.05.2023 AU 2023901293
(71) Applicant: Multibar Pty Ltd, Woronora, NSW 2232 (AU)
(72) Inventor: HARDIE, Mark, NEW SOUTH WALES, 2232 (AU); CAMPBELL, Alistair, NEW SOUTH WALES, 2232 (AU)
(74) Representative: Regimbeau

(57) **Abstract**

A wheelbarrow tow attachment to attach to a wheelbarrow for transportation comprising; a pair of spaced apart support brackets; a spacing bar attached adjacent a first end of the spaced apart support brackets configured to support an outer base of the wheelbarrow, wherein the spacing bar defines a space configured to receive a wheel of the wheelbarrow between the spaced apart support brackets; an adjustable bar configured to attach to the spaced apart support brackets and define the space; and a vehicle attachment bracket; wherein the adjustable bar includes outer bar extension region including a wheelbarrow frame attachment.

## Description

### Field

The present invention relates to a wheelbarrow tow attachment configured to connect to a tow ball.

### Background

Each document, reference, patent application or patent cited in this text is expressly incorporated herein in their entirety by reference, which means that it should be read and considered by the reader as part of this text. That the document, reference, patent application, or patent cited in this text is not repeated in this text is merely for reasons of conciseness.

In accordance with current practice, when an individual wheelbarrow is to be transported to a remote site, as distinct from mass transportation of wheelbarrows to a sale site, it typically must be fixed to a vehicle and transported to the remote site. Currently, there are known towing attachments that drag a wheelbarrow behind a vehicle (such as a tractor). These known towing attachments rely on the wheel of the wheelbarrow supporting the weight of the wheelbarrow and rotating as the wheelbarrow moves. These known towing attachments attach to an end of the wheelbarrow, with the wheelbarrow extending longitudinally from the vehicle, effectively extending the length of the vehicle.

This known arrangement of towing a wheelbarrow imposes the negative consequence of an extended length to the vehicle, increasing the risk of damage to the wheelbarrow and vehicle and unnecessarily wearing the wheel and wheel bearing arrangement of the wheelbarrow.

Alternatively, wheelbarrows are lashed to the roof of suitable vehicles or placed in the tray of a suitable truck or utility vehicle. This takes up space that could otherwise be used for alternative storage.

There is a need for a device for attaching a wheelbarrow to a vehicle during transport that minimises the wear on the wheelbarrow, the vehicle and/or minimises the extension of the wheelbarrow from the vehicle.

Reference to cited material or information contained in the text should not be understood as a concession that the material or information was part of the common general knowledge or was known in Australia or any other country.

### Summary of Invention

It is an object of this invention to ameliorate, mitigate or overcome, at least one disadvantage of the prior art, or which will at least provide the public with a practical choice.

The present invention seeks to provide a wheelbarrow tow arrangement for a wheelbarrow comprising a pair of spaced apart support brackets, each support bracket including a first end and a second end, the second end configured to be distal the first end; a spacing bar attached adjacent the first end of the spaced apart support brackets arranged to support an outer base of the wheelbarrow, wherein the spacing bar spans a space configured to receive a wheel of the wheelbarrow between the spaced apart support brackets; an adjustable bar configured to attach to the spaced apart support brackets and span the space; and a vehicle attachment bracket; wherein the adjustable bar includes outer bar extension regions, each having a wheelbarrow frame attachment.

Preferably, the spaced apart support brackets are parallel.

Preferably, the wheelbarrow tow arrangement further includes a central spacing bar spaced from the first and second ends, wherein the central spacing bar defines the space.

Preferably, the spaced apart support brackets are configured for removable attachment to the vehicle attachment bracket.

Preferably, the spaced apart brackets are attachable to the base using a restraining pin.

Preferably, the vehicle attachment bracket is configured for attachment to a vehicle tow ball.

Preferably, each of the spaced apart support brackets include spaced apertures extending from the second end towards the first end, the apertures configured to receive the adjustable bar.

Preferably, the second apertures are located on an extension finger of each of the spaced apart brackets.

Preferably, the apertures on each of the spaced apart brackets are aligned to receive the adjustable bar in a plurality of locations at different distances from the spacing bar.

Preferably, the wheelbarrow frame attachment is configured to move along the outer bar extension region.

Preferably, the wheelbarrow frame attachment is configured to engage a frame of the wheelbarrow.

In a second embodiment, the present invention seeks to provide a method of stowing and transporting a wheelbarrow on a vehicle, including the following operations; connecting a vehicle attachment bracket to the tow attachment of a vehicle, connect the opposing wheelbarrow frame attachments to the wheelbarrow frame, slidingly engage a recess in the base of the spaced apart brackets with a restraining pin engaged with the base distal the vehicle, rotate the spaced apart brackets around the restraining pin engaged with the base distal the vehicle to align a first aperture, proximate the vehicle, in the base with a base aperture in the spaced apart brackets and passing a restraining pin through the aligned apertures.

### Brief Description of Drawings

Further features of the present invention are more fully described in the following description of several non-limiting embodiments thereof. This description is included solely for the purposes of exemplifying the present invention. It should not be understood as a restriction on the broad summary, disclosure or description of the invention as set out above. The description will be made with reference to the accompanying drawings in which:
Figure 1 is a perspective view of a wheelbarrow tow attachment in accordance with an embodiment of the present invention attached to a wheelbarrow;
Figure 2 is a perspective view of the wheelbarrow tow attachment of Figure 1;
Figure 3 is a side view of the wheelbarrow tow attachment of Figure 1;
Figure 4 is an end view of the wheelbarrow tow attachment of Figure 1;
Figure 5 is a top down view of the wheelbarrow tow attachment of Figure 1;
Figure 6 is a perspective view of the wheelbarrow tow attachment of Figure 1 in use;
Figure 7 is a side view of the wheelbarrow tow attachment of Figure 6.

In the drawings like structures are referred to by like numerals throughout the several views. The drawings shown are not necessarily to scale, with emphasis instead generally being placed upon illustrating the principles of the present invention

### Description of Embodiments

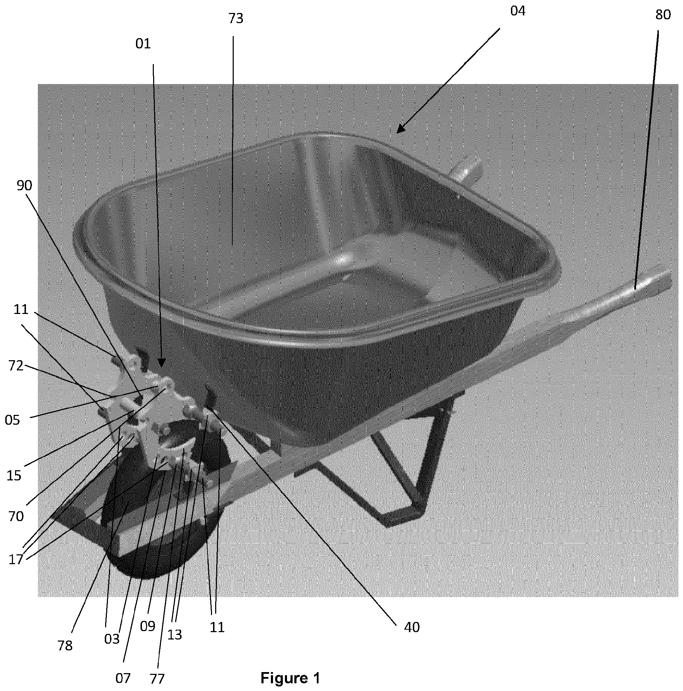

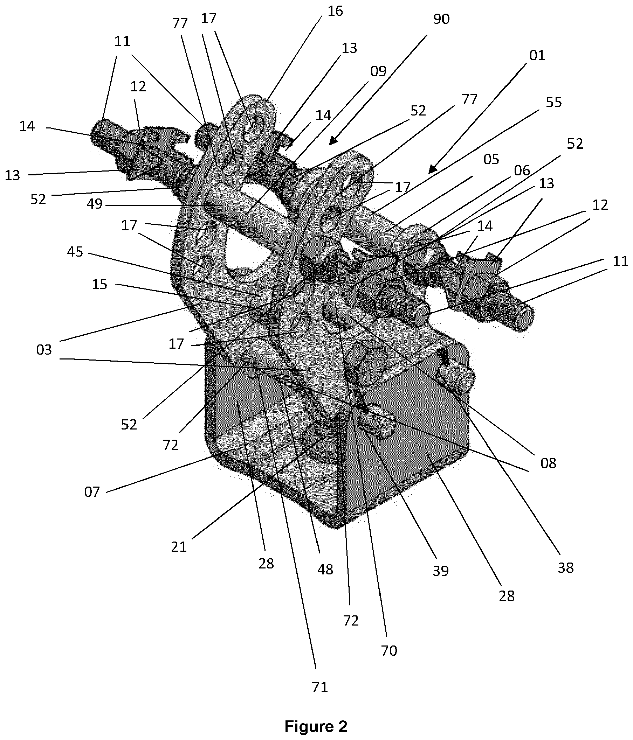

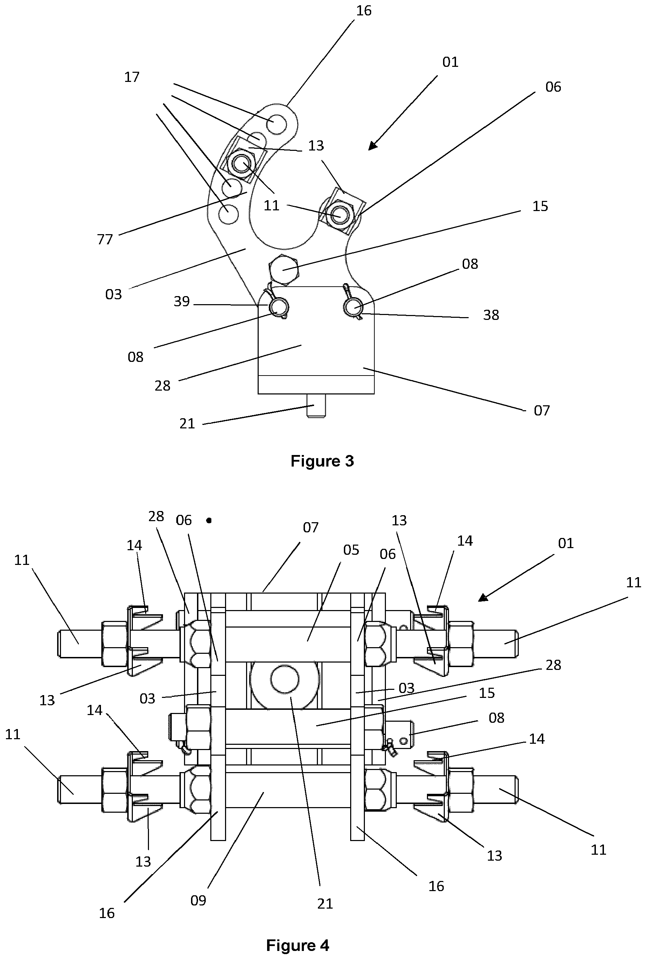

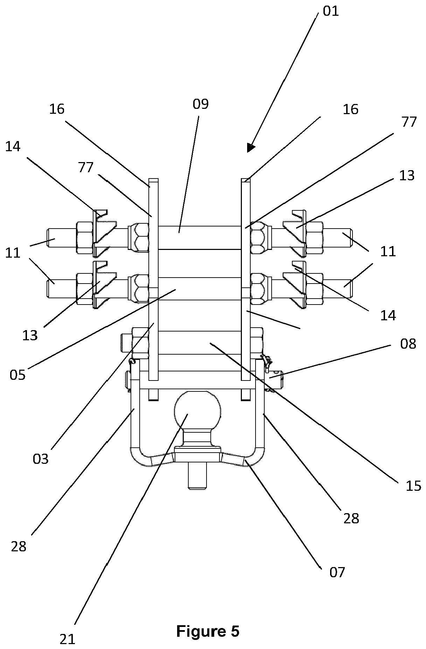

With reference to figures 1 to 7, the present invention and its use will be described in further detail below.

Throughout the description, front or forwards with respect to a wheelbarrow will be taken to be the end of the wheelbarrow distal the handles of the wheelbarrow.

Broadly, a first embodiment of the present invention discloses a wheelbarrow tow attachment 01 configured to attach a vehicle to a wheelbarrow 04 for transportation of the wheelbarrow from one location to another as described below, with reference to the accompanying drawings.

Referring to Figures 1 to 7, an embodiment of a wheelbarrow tow attachment 01 in accordance with the present invention is described below.

The tow attachment 01 includes a base 07, configured to engage and be stowed on a vehicle for transportation. As shown throughout the drawings, the base 07 is arranged to attach to the vehicle using a tow ball 21. The skilled addressee will recognize that the base 07 can be configured to attach to an alternative vehicle attachment such as a trig hitch, ball coupling, pintle hook, or alternative hitch as understood by the skilled addressee. Connections between a tow attachment and vehicle are well known and are not expanded on further.

Connected to, and extending away from, the base 07 are a pair of spaced apart support brackets 03. The spaced apart brackets 03 are removable from the base 07. The spaced apart support brackets 03 connect to the base 07 in a spaced apart arrangement so that a wheel 78 of the wheelbarrow 04 fits between the pair of spaced apart brackets 03. A base bar 15 extends between the pair of spaced apart support brackets 03. The base bar 15 is attached to each of the spaced apart brackets 03 by passing through aligned apertures in each of the pair of spaced apart brackets 03. In one embodiment, as shown in the drawings, a spacing sleeve 45 is configured to have a larger diameter than the aperture in each of the pair of spaced apart brackets 03 configured to receive the base bar 15. The spacing sleeve 45 restrains movement of the pair of spaced apart brackets 03 towards each other and defines the space 90 between the pair of paced apart brackets 03. In one embodiment, the base bar 15 is fixed to the outer surface of the pair of spaced apart brackets 03 in a nut and bolt configuration.

Each of the pair of spaced apart brackets 03 include a first end 06 and a second end 16. The first end 06 is configured to be proximate a vehicle to which tow attachment 01 is connected. The second end 16 is configured to be distal a vehicle to which tow attachment 01 is connected. When attached to the base 07, the second end 16 extends further from the base 07 than the first end 06.

Each of the spaced apart brackets 03 include a first end aperture 46 proximate the first end 06. When the wheelbarrow attachment 01 is attached to a wheelbarrow 04, the first end 06 is closer to a front end of the wheelbarrow 04. The spaced apart brackets 03 includes a plurality of second apertures 17 proximate the second end 16. The second apertures 17 are arranged away from the second end 16 and so that aligned second apertures 17 on opposing spaced apart brackets 03 are arranged to receive an adjustment bar 09 as described further below.

In the illustrated embodiment, the second apertures 17 are located on a curved extension finger 77. The second apertures 17 extend along the extension finger 77.

A first end spacing bar 05 extends between first end apertures 46 on each of the pair of spaced apart brackets 03. In one embodiment as shown in the drawings, a first bar sleeve 55 is configured to have a larger diameter than the aperture in each of the pair of spaced apart brackets 03 configured to receive the first end spacing bracket 05. The first bar sleeve 55 restrains movement of the pair of spaced apart brackets 03 towards each other and defines the space 90 between the pair of spaced apart brackets 03. The first end spacing bar 05 extends between spaced apart brackets 03 and include extension regions 11 that extend away from the space 90.

The extension region 11 of first end spacing bar 05 include wheelbarrow frame attachments 13. The wheelbarrow frame attachment 13 is arranged to engage a wheelbarrow frame member 40. In one embodiment, the engagement between the wheelbarrow frame attachment 13 and the wheelbarrow frame member 40 restrain vertical movement of the wheelbarrow 04 in use. The wheelbarrow frame attachment 13 includes slots 14 sized to receive the wheelbarrow frame member 40. The extension region 11 includes an adjustment mechanism 12 that is configured to move along the length of the extension region 11. The adjustment mechanism 12 is arranged to abut against the wheelbarrow frame attachment 13 to restrain movement of the wheelbarrow frame attachment 13 away from the spaced apart brackets 03.

In one embodiment, the extension region 11 is a threaded bolt.

In the embodiment of the drawings, the frame member 40 is a reinforcing extension that extends between the extended handle/lever of the wheelbarrow and the base of the tray 73.

A locking mechanism 52 is connected to the extension region and is configured to abut the outer surface of a spaced apart bracket, wherein the locking mechanism 52 is configured to restrain movement of the first end spacing bar 05. In one embodiment, the locking mechanism is a nut. In an alternative embodiment, the locking mechanism 52 is a lock nut.

An adjustment bar 09 extends between aligned second apertures 17 on each of the pair of spaced apart brackets 03. In one embodiment as shown in the drawings, an adjustable bar sleeve 49 is configured to have a larger diameter than the second aperture 17 in each of the pair of spaced apart brackets 03 configured to receive the adjustment bar 09. The adjustable bar sleeve 49 restrains movement of the pair of spaced apart brackets 03 towards each other and defines the space 90 between the pair of spaced apart brackets 03. The adjustment bar 09 extends between spaced apart brackets 03 and include extension regions 11 that extend away from the space 90.

The wheelbarrow 04 shown in the figures of the present invention includes a frame member that extends from the lever arms 80 proximate the wheel 78 in a generally vertical extension when the wheelbarrow 04 is supported on a horizontal surface. Variations of wheelbarrows 04 exist with an alternative arrangement of a frame member that attaches to the wheelbarrow tray 73. The alternative arrangements provide a different angle for the frame member 40 with respect to the wheel 78 and tray 73. This can also be provided by way of an alternatively angled front of the tray 73.

The aligned second apertures 17, provide a plurality of positions to insert and lock the adjustment bar 09 to allow it to attach to frame members 40 from different wheelbarrows with a variety of angular alignment with respect to a lower surface of the tray 73.

The first end spacing bar 05 and the adjustment bar 09 may be of the same profile.

The extension region 11 of adjustment bar 09 include wheelbarrow frame attachments 13. The wheelbarrow frame attachment 13 is arranged to engage a wheelbarrow frame member 40. In one embodiment, the engagement between the wheelbarrow frame attachment 13 and the wheelbarrow frame member 40 restrain vertical movement of the wheelbarrow 04 in use. The wheelbarrow frame attachment 13 includes slots 14 sized to receive the wheelbarrow frame member 40. The extension region 11 includes an adjustment mechanism 12 that is configured to move along the length of the extension region 11. The adjustment mechanism 12 is arranged to abut against the wheelbarrow frame attachment 13 to restrain movement of the wheelbarrow frame attachment 13 away from the spaced apart brackets 03. In one embodiment, the adjustment mechanism is a nut.

As shown throughout the drawings, base 07 takes the form of a channel section with base 27 and parallel side walls 28. It is within the scope of the present invention for the base 07 to take an alternative profile provided that the space between the pair of spaced apart brackets 03 resulting from the attachment to the base 07 provides the attachment and spacing with respect to a wheelbarrow 04 as described throughout the specification. For example, the base may take the profile of a slotted box section with the slots arranged to receive the pair of spaced apart brackets 03 as described below. The base 07 could alternatively take the form of a base with arms or reinforced arms extending from the base 07 to support the restraining pin 08 as described below. The profile of the base 07 may be altered to support an attachment to alternatives forms of hitching to a vehicle or vehicle attachment as noted above.

As shown throughout the drawings, an upper region of each of the parallel side walls 28 includes a first aperture 38 configured to be proximate a vehicle when the tow attachment is attached to a vehicle and a second aperture 39 configured to be distal a vehicle when the tow attachment 01 is attached to a vehicle. The first aperture 38 on one of the parallel side walls 28 is aligned with the first aperture 28 on the opposing side wall 28 to receive a restraining pin 08 through the aligned first apertures 38. The restraining pin 08 is removably locked in place between side walls 28 using a locking pin. The skilled addressee will recognise that alternative removable or reversable restraining means such as a nut and bolt or otherwise could be used in place of the illustrated locking pin arrangement.

The second aperture 39 on one of the parallel side walls 28 is aligned with the second aperture 39 on the opposing side wall 28 to receive a restraining pin 08 through the aligned second apertures 39. The restraining pin 08 is removably locked in place between side walls 28 using a locking pin. The skilled addressee will recognise that alternative removable or reversable restraining means such as a nut and bolt or otherwise could be used in place of the illustrated locking pin arrangement.

The spaced apart brackets 03 includes a base aperture 70, proximate a base edge 71 of the spaced apart brackets 03. The base aperture 70 is configured to receive restraining pin 08 that passes through first aperture 38, through the base 07 and engage the base 07 to fix the spaced apart brackets 03. The spaced apart brackets 03 include a base recess 72 that opens to surface of the spaced apart brackets 03. The base recess 72 is configured to slidingly engage with the restraining pin 08 that passes through second aperture 39.

An embodiment of the use of the wheelbarrow tow attachment 01 to transport a wheelbarrow 04 on a vehicle is described below.

The pair of spaced apart brackets 03 are connected with base bar 15, first end spacing bar 05 and the adjustment bar 09 to define space 90 between the spaced apart brackets 03. The spaced apart brackets 03 are not attached to the base 07 using restraining pins 08 and the base 07 and spaced apart brackets 03 are separate.

The base 07 is fixed to the vehicle using a tow ball through the base 07 as understood by the skilled addressee. Where alternative connection to the vehicle are available, such as the above discussed hitches, they are used to connect to the vehicle in place of the base 07. Pin 08 is placed through second apertures 39 and is locked in place in the base 07. Pin 08 that passes through first apertures 38 is absent from the base at this stage.

The wheel 78 of the wheelbarrow 04 is placed in the space 90 so that the wheel 78 passes between curved fingers 77 and the second end 16 is lower than the first end 06 as shown in Figure 1. The first end spacing bar 05 is positioned through the front end apertures 49 with first bar sleeve 45 located between the spaced apart brackets 03. The slots 14 on the opposing spaced apart brackets 03 wheelbarrow frame attachment 13 are loosened on the extensions 11 to maximise the distance between opposing brackets 13. The brackets 13 are tightened so that slots 14 on the brackets 13 receive wheelbarrow frame member 40. The tightening of the opposed brackets 13 locks the pair of spaced apart brackets 03.

If the slots 14 and brackets 13 do not align to receive the wheelbarrow frame member 40, the brackets 13 can be rotated around the extension region 11. If further angular adjustment of the position of the brackets 13 and slots 14 is required so the adjustment bar 09 can be placed between alternative aligned second apertures 17 to align the slots 14 with the frame member 40.

With the brackets 13 attached to wheelbarrow frame member 40 as noted above, the wheelbarrow is pushed towards the base 07 with the wheel 78 and spaced apart brackets 03 in a forward direction. When the spaced apart brackets 03 and the base 07 are proximate, the position of the spaced apart brackets 03 is manually adjusted, using the lever arms 80 or otherwise to raise the spaced apart brackets to slide the base recess 72 to slidingly engage the restraining pin 08. In one embodiment, the lever arms are lifted to lower the base recess 72 onto the restraining pin 08 through second apertures 39.

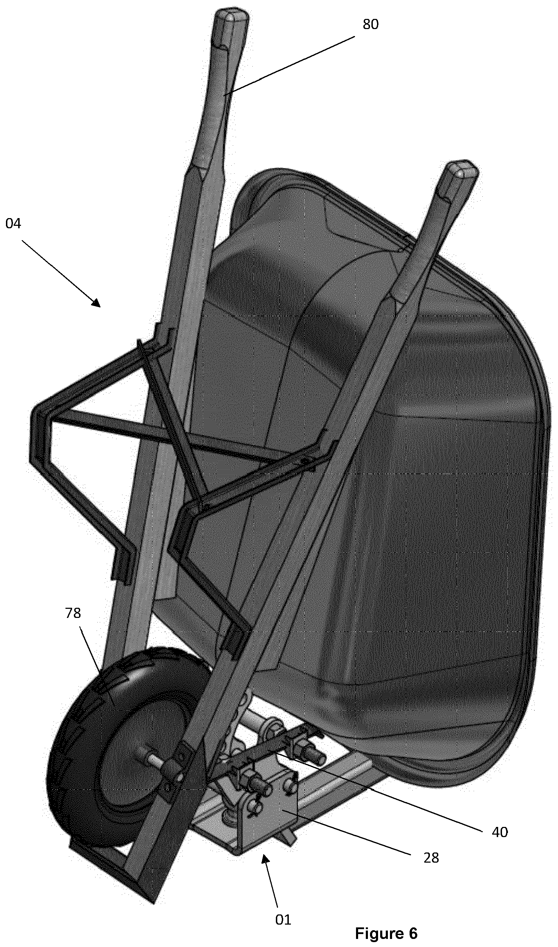

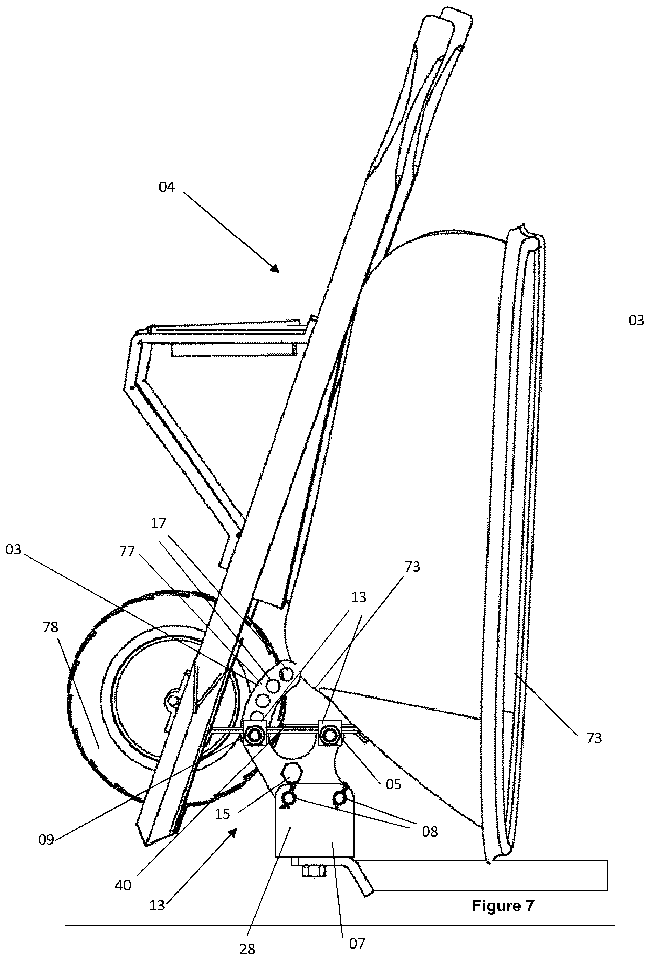

With the base recess 72 engaged with the restraining pin 08 through second apertures 39, the engagement is used as a pivot point. The wheelbarrow 04 is raised using lever arms 80 so that base apertures 70 on the spaced apart brackets 03 align with first apertures 38. A restraining pin 08 is placed through base apertures 70 and first apertures 38 locking the spaced apart brackets 03 and the wheelbarrow in a vertical arrangement as shown in figures 6 and 7. This vertical arrangement, limits the extension of the wheelbarrow from the body of a vehicle and allows the wheelbarrow to be transported.

Although the invention has been described with reference to specific examples, it will be appreciated by those skilled in the art that the invention may be embodied in many other forms. For example, in one embodiment, the base 07 and spaced apart brackets 03 may be permanently fixed together, are connected to wheel barrow frame 40 as one piece and the wheelbarrow is lifted from the lever arms 80 to tilt the base 07 directly into position to receive a tow ball directly and restrain the wheelbarrow 04.

In one embodiment, shown throughout the drawings, the base 07 engages a tow ball 21 of a vehicle.

## Claims

1. A wheelbarrow tow attachment to attach to a wheelbarrow for transportation comprising;
a pair of spaced apart support brackets including a first end and a second end, wherein the second end is distal the first end;
a spacing bar attached adjacent a first end of the spaced apart support brackets configured to support an outer base of the wheelbarrow, wherein the spacing bar defines a space configured to receive a wheel of the wheelbarrow between the spaced apart support brackets;
an adjustable bar configured to attach to the spaced apart support brackets and define the space;
and a vehicle attachment bracket;
wherein the adjustable bar includes outer bar extension region including a wheelbarrow frame attachment.

2. The wheelbarrow tow attachment of claim 1, wherein the spaced apart brackets are parallel.

3. The wheelbarrow tow attachment of claim 1 or 2 includes a central spacing bar distal the first and second ends, wherein the central spacing bar defines space.

4. The wheelbarrow tow attachment of any one of the preceding claims, wherein the spaced apart support brackets are removably attachable to the vehicle attachment bracket.

5. The wheelbarrow tow attachment of any one of the preceding claims, wherein the spaced apart brackets attach to the vehicle attachment bracket using a restraining pin.

6. The wheelbarrow tow attachment of any one of the preceding claims, wherein the vehicle attachment bracket is configured to engage a vehicle tow ball.

7. The wheelbarrow tow attachment of any one of the preceding claims, wherein the spaced apart support brackets include apertures spaced along the longitudinal length of the spaced apart brackets from a second end of the spaced apart brackets distal the first end, the apertures configured to receive the adjustable bar.

8. The wheelbarrow tow attachment of any one of the preceding claims, wherein the apertures on each of the spaced apart brackets are aligned to receive the adjustable bar in a plurality of locations along the length of the spaced apart brackets.

9. The wheelbarrow tow attachment of any one of the preceding claims, wherein the wheelbarrow frame attachment is configured to move along the length of the outer bar extension region.

10. The wheelbarrow tow attachment of any one of the preceding claims, wherein the wheelbarrow frame attachment is configured to engage a frame of the wheelbarrow.

11. A method of stowing and transporting a wheelbarrow on a vehicle with a tow attachment, including the following operations;
connecting the base to the tow attachment,
connect the opposing wheelbarrow frame attachments to the wheelbarrow frame,
slidingly engage a recess in the base of the spaced apart brackets with a restraining pin engaged with the base distal the vehicle, rotate the spaced apart brackets around the restraining pin engaged with the base distal the vehicle to align a first aperture, proximate the vehicle, in the base with a base aperture in the spaced apart brackets;
and passing a restraining pin through the aligned apertures.
